# EUROPEAN PATENT APPLICATION

(11) **EP 3 144 276 A1**
(43) Date of publication of application: **22.03.2017**
(21) Application number: 15791944.0
(22) Date of filing: 07.05.2015
(51) Int. Cl.: C01B 32/182, F27B 1/08, F27D 11/02, H05B 3/00, H05B 3/62

(54) **GRAPHITIZATION FURNACE**

(30) Priority: 12.05.2014 JP 2014099065; 12.05.2014 JP 2014099066
(71) Applicant: IHI Corporation, Tokyo 135-8710 (JP); IHI Machinery and Furnace Co., Ltd., Minato-ku, Tokyo 108-0075 (JP)
(72) Inventor: MATSUDA Yoshiyasu, Tokyo 108-0075 (JP); INZEN Atsuo, Tokyo 135-8710 (JP)
(74) Representative: Lamb, Martin John Carstairs
(86) International application number: PCT/JP2015/063194
(87) International publication number: WO 2015/174320

(57) **Abstract**

A graphitization furnace (1A) includes: a first electrode (8); a second electrode (9) disposed so as to face the first electrode; a first energized heating element (11) provided on a surface of the first electrode facing the second electrode; and a second energized heating element (12) provided on a surface of the second electrode facing the first electrode. The first and second energized heating elements are configured to allow to be disposed therebetween, an object (W1) to be processed. The graphitization furnace is configured to heat and graphitize the object to be processed disposed between the first and second energized heating elements by energizing between the first and second electrodes.

## Description

### Technical Field

The present invention relates to a graphitization furnace.

Priority is claimed on Japanese Patent Application No. 2014-99065, filed May 12, 2014, and Japanese Patent Application No. 2014-99066, filed May 12, 2014, the contents of which are incorporated herein by reference.

### Background

Graphite has industrially excellent properties in terms of lubricity, electrical conductivity, thermal resistance, chemical resistance and the like, and is used in a wide range of fields such as the semiconductor, nuclear, aviation and machinery fields. Graphite is produced by heating, for example, carbon powder to a high temperature (for example, a temperature between 2000°C and 3000°C) in a graphitization furnace.

For such a graphitization furnace, a technology is proposed in which carbon powder is put into a crucible, the lower end part of a divided electrode is inserted into the carbon powder, the divided electrode is energized and heated, and the carbon powder contained in the crucible is graphitized (for example, refer to Patent Document 1).

Additionally, in recent years, as a raw material to be subjected to graphitization, carbon powders having various properties have been used. Thus, a carbon powder may be used whose bulk specific gravity (filling density) is much less than that between about 0.6 and 0.7 of a conventional carbon powder.

Patent Document 2 discloses a graphitization method for a carbonaceous molded body. Patent Document 3 discloses a sintering apparatus which sinters a molded body formed of powder of ceramic, metal, carbon or the like. Patent Document 4 discloses a production method and a production apparatus for graphitic carbon powder.

### Document of Related Art

### Patent Document

[Patent Document 1] Japanese Unexamined Patent Application, First Publication No. 2012-246200
[Patent Document 2] Japanese Unexamined Patent Application, First Publication No. H9-227232
[Patent Document 3] Japanese Unexamined Patent Application, First Publication No. 2000-239709
[Patent Document 4] Japanese Unexamined Patent Application, First Publication No. 2006-306724

### Summary

### Technical Problem

In the graphitization furnace of Patent Document 1, the lower end part of a divided electrode is inserted into carbon powder contained in a crucible, whereby the bulk specific gravity (the filling density) of carbon powder pressed by the divided electrode may become higher than that of carbon powder in another position, and variation may occur in the bulk specific gravity of the carbon powder in the crucible. Particularly, in a case where a raw material having a low bulk specific gravity is processed, since the bulk specific gravity of carbon powder pressed by the divided electrode becomes much higher than that before the carbon powder is pressed, the degree of variation in the bulk specific gravity may be further increased.

When a large variation occurs in the bulk specific gravity of the carbon powder contained in the crucible, an electric current easily flows mainly through a portion having a high bulk specific gravity (a high filling density). Accordingly, since the portion through which a large electric current flows is intensively heated, it may be difficult to uniformly graphitize the carbon powder contained in the crucible, and variation may easily occur in the quality of obtained products (graphite). Thus, in the related art, energizing heating has to be controlled in order not to cause variation in the quality of products (graphite), and it may be very difficult to perform such control.

The present invention has been made in view of the above circumstances, and an object thereof is to provide a graphitization furnace which can simplify the energizing control during heating and can limit variation in the quality of products (graphite) obtained through energizing heating.

### Solution to Problem

A first aspect of the present invention is a graphitization furnace, including: a first electrode; a second electrode disposed so as to face the first electrode; a first energized heating element provided on a surface of the first electrode facing the second electrode; and a second energized heating element provided on a surface of the second electrode facing the first electrode. The first and second energized heating elements are configured to allow to be disposed therebetween, an object to be processed. In addition, the graphitization furnace is configured to heat and graphitize the object to be processed disposed between the first and second energized heating elements by energizing between the first and second electrodes.

A second aspect of the present invention is that in the graphitization furnace of the first aspect, the first and second energized heating elements are configured to allow to be sandwiched therebetween, an electrically conductive crucible containing the object to be processed.

A third aspect of the present invention is that in the graphitization furnace of the second aspect, the first and second energized heating elements are configured to allow a plurality of crucibles to be arranged in series therebetween.

A fourth aspect of the present invention is that in the graphitization furnace of the second aspect, the specific resistance of each of the first and second energized heating elements is greater than that of the crucible.

A fifth aspect of the present invention is that in the graphitization furnace of the third aspect, the specific resistance of each of the first and second energized heating elements is greater than that of each of the crucibles.

A sixth aspect of the present invention is that in the graphitization furnace of any one of the second to fifth aspects, a surface of the first energized heating element which contacts the crucible has a size greater than or equal to that of an end surface of the crucible which contacts the first energized heating element, and a surface of the second energized heating element which contacts the crucible has a size greater than or equal to that of an end surface of the crucible which contacts the second energized heating element.

A seventh aspect of the present invention is that in the graphitization furnace of the first aspect, the first and second energized heating elements are configured to allow to be sandwiched therebetween, an electrically conductive molded object to be processed.

A eighth aspect of the present invention is that in the graphitization furnace of the seventh aspect, the specific resistance of each of the first and second energized heating elements is greater than that of the molded object to be processed.

A ninth aspect of the present invention is that in the graphitization furnace of the seventh or eighth aspect, a surface of the first energized heating element which contacts the molded object to be processed has a size greater than or equal to that of an end surface of the molded object to be processed which contacts the first energized heating element, and a surface of the second energized heating element which contacts the molded object to be processed has a size greater than or equal to that of an end surface of the molded object to be processed which contacts the second energized heating element.

### Effects

According to a graphitization furnace of the present invention, since surfaces of the first and second electrodes facing each other are provided with the first and second energized heating elements, respectively, when energizing between the first and second energized heating elements is performed, it is possible to uniformly apply energizing-heat to an object to be processed disposed therebetween. Thus, it is possible to simplify the energizing control during heating. In addition, it is possible to limit variation in the quality of products (graphite) obtained through energizing heating, and to stabilize the quality.

### Brief Description of Drawings

FIG. 1 is a cross-sectional side view showing a first embodiment of a graphitization furnace of the present invention.
FIG. 2 is a cross-sectional side view showing crucibles which are used in the first embodiment.
FIG. 3 is a cross-sectional side view showing a second embodiment of the graphitization furnace of the present invention.

### Description of Embodiments

Hereinafter, embodiments of a graphitization furnace of the present invention are described in detail with reference to the drawings. In the following drawings, the scale of each member is appropriately changed in order to show each member in a recognizable size.

### (First Embodiment)

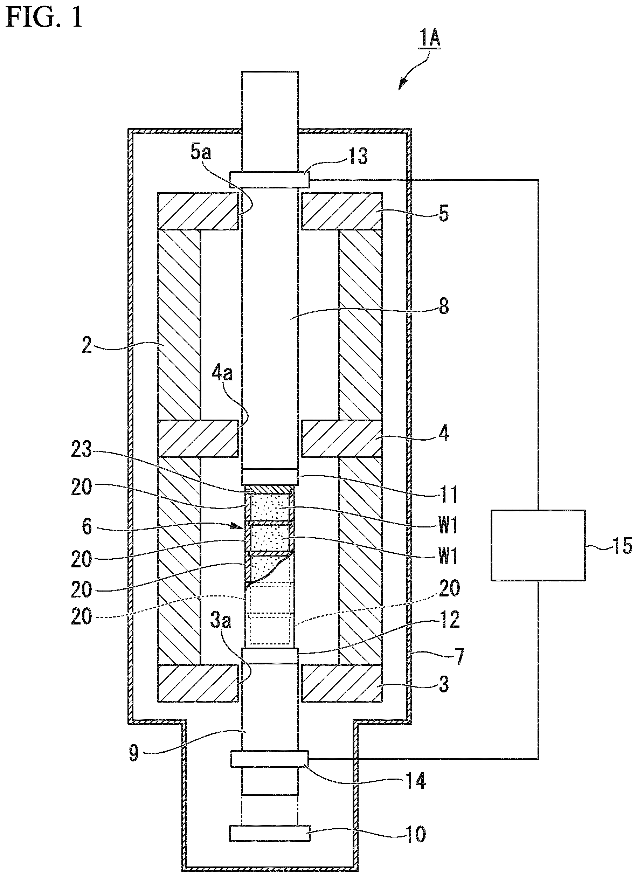

FIG. 1 is a cross-sectional side view showing a first embodiment of a graphitization furnace of the present invention, in which the reference sign 1A represents a graphitization furnace. A graphitization furnace 1A is an apparatus which heats and graphitizes an object W1 to be processed described below.

The graphitization furnace 1A is a batch processing-type apparatus and includes a cylindrical side wall portion 2 formed of a thermal insulation material, an annular bottom portion 3 formed of a thermal insulation material, an intermediate portion 4 and a top portion 5. The cylindrical side wall portion 2 is arranged so that the central axis line thereof extends in the vertical direction (the up-and-down direction in FIG. 1).

The bottom portion 3 is arranged so as to cover a lower opening of the side wall portion 2, and the top portion 5 is arranged so as to cover an upper opening of the side wall portion 2. The intermediate portion 4 is arranged so as to cover an internal opening positioned in the middle part in the height direction of the side wall portion 2, and serves as a partition wall covering the upper part of an energizing heating-processing section 6 described below. That is, the intermediate portion 4 is inserted in the middle part in the longitudinal direction (the height direction) of the side wall portion 2.

The side wall portion 2 is provided with a loading-and-unloading opening (not shown) which communicates with the energizing heating-processing section 6 provided inside the side wall portion 2 and is used for loading and unloading a crucible 20. The loading-and-unloading opening is provided with a door (not shown) which covers the loading-and-unloading opening so as to be capable of opening and closing it and is formed of a thermal insulation material. The energizing heating-processing section 6 is an area (a space) surrounded by the side wall portion 2, the bottom portion 3 and the intermediate portion 4. During heating, the energizing heating-processing section 6 is filled with inert gas, and the crucible 20 is disposed in the energizing heating-processing section 6. Since the energizing heating-processing section 6 is heated to a temperature between about 2000°C and 3000°C, a material having a thermal resistance property and a thermal insulation property capable of resisting such a high temperature is used for the thermal insulation materials forming the side wall portion 2, the bottom portion 3, the intermediate portion 4, the top portion 5 and the door.

A chamber 7 is provided around the side wall portion 2, the bottom portion 3, the intermediate portion 4 and the top portion 5 so as to enclose them. Every part of the chamber 7 is provided with a water cooling-type cooler (not shown), and thereby heat of the crucible 20 or the energizing heating-processing section 6 is limited from being emitted into the outside of the chamber 7 via the side wall portion 2 or the like through radiation or the like.

In addition, the graphitization furnace 1A includes an upper electrode 8 (a first electrode) and a lower electrode 9 (a second electrode) disposed so as to face the upper electrode 8.

The upper electrode 8 is a circular columnar electrode hung from a position above the chamber 7 and is inserted into a through-hole 5a of the top portion 5 through a through-hole (not shown) provided in the ceiling part of the chamber 7, and an end part (the lower end part) of the upper electrode 8 passes through a through-hole 4a of the intermediate portion 4 and is positioned below the intermediate portion 4. The upper electrode 8 is formed of a material having electrical conductivity and a thermal resistance property which resists a graphitization temperature (for example, a temperature between 2000°C and 3000°C, preferably a temperature between 2800°C and 3000°C) of the object W1 to be processed, and is formed of, for example, graphite.

The lower electrode 9 is a circular columnar electrode erected on a lifter 10 installed in the bottom of the chamber 7 to be capable of lifting up and lowering and is inserted into a through-hole 3a of the bottom portion 3, and an end part (the upper end part) of the lower electrode 9 is positioned above the bottom portion 3. The lower electrode 9 is formed of a material having electrical conductivity and a thermal resistance property which resists the graphitization temperature of the object W1 to be processed similarly to the upper electrode 8, and is formed of, for example, graphite.

The upper and lower electrodes 8 and 9 are formed having approximately the same diameter and are disposed coaxially with each other in the vertical direction. Accordingly, the upper and lower electrodes 8 and 9 are disposed so that the end surfaces (the lower end surface of the upper electrode 8 and the upper end surface of the lower electrode 9) thereof face each other.

The lifter 10 is a generally known device including a hydraulic cylinder or the like, and is configured to lift up and lower the lower electrode 9 about several tens of millimeters, thereby to extend the distance between the upper and lower electrodes 8 and 9 compared to a predetermined distance therebetween, and to return the extended distance to the original distance.

The lower end surface of the upper electrode 8 is provided with a circular disk-shaped upper energized heating element 11 (a first energized heating element), and the upper end surface of the lower electrode 9 is provided with a circular disk-shaped lower energized heating element 12 (a second energized heating element). That is, the graphitization furnace 1A further includes the upper energized heating element 11 provided on a surface of the upper electrode 8 facing the lower electrode 9, and the lower energized heating element 12 provided on a surface of the lower electrode 9 facing the upper electrode 8. The upper energized heating element 11 is an electrically conductive member which is formed having the same diameter as that of the lower end surface of the upper electrode 8 and having a thickness of about several tens of millimeters and is disposed coaxially with the upper electrode 8. The upper energized heating element 11 is formed of a material having a greater specific resistance than that of the crucible 20 described below. The lower energized heating element 12 is an electrically conductive member which is formed having the same diameter as that of the upper end surface of the lower electrode 9 and having a thickness of about several tens of millimeters and is disposed coaxially with the lower electrode 9. The lower energized heating element 12 is formed of a material having a greater specific resistance than that of the crucible 20 described below. That is, the upper and lower energized heating elements 11 and 12 in this embodiment are configured to generate heat (to generate Joule heat) when energizing therebetween is performed. In addition, the upper or lower energized heating element 11 or 12 may be provided with a through-hole (or a plurality of through-holes) penetrating therethrough in the vertical direction in order to increase the specific resistance thereof.

The specific resistance of the upper electrode 8 may be less than or equal to that of the upper energized heating element 11, and the specific resistance of the lower electrode 9 may be less than or equal to that of the lower energized heating element 12.

For example, graphite is used for the formation materials of the upper and lower energized heating elements 11 and 12. The characteristics of graphite such as specific resistance can be controlled by the production method thereof or the like. A carbon fiber-reinforced carbon composite material (a C/C composite) may be used for the formation materials of the upper and lower energized heating elements 11 and 12.

The upper and lower energized heating elements 11 and 12 are disposed facing each other with an appropriate distance therebetween. That is, the central axes thereof extending in the vertical direction are disposed coaxially with each other. In addition, the energizing heating-processing section 6 is provided between the upper and lower energized heating elements 11 and 12, and in the energizing heating-processing section 6, the crucible 20 containing the object W1 to be processed is energized and heats up, and thereby the object W1 to be processed contained in the crucible 20 is heated and processed. The upper and lower energized heating elements 11 and 12 are configured to allow to be sandwiched therebetween, the crucible 20 containing the object W1 to be processed, in other words, are configured to allow to be disposed therebetween, the object W1 to be processed.

The crucible 20 which is disposed in the energizing heating-processing section 6 is formed of a material having electrical conductivity and a thermal resistance property which resists the graphitization temperature of the object W1 to be processed similarly to the upper and lower electrodes 8 and 9, and is formed of, for example, graphite in a cylindrical shape with a bottom. A carbon fiber-reinforced carbon composite material may be used for the formation material of the crucible 20. As described above, the crucible 20 is formed of a material whose specific resistance is less than that of each of the upper and lower energized heating elements 11 and 12.

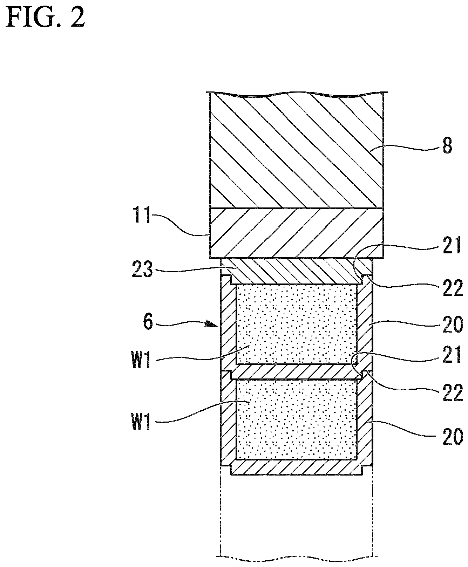

In this embodiment, five (a plurality of) crucibles 20 are disposed in the energizing heating-processing section 6 in series in the vertical direction. The five crucibles 20 are formed having the same shape and size. FIG. 2 is a cross-sectional side view showing a few crucibles 20 positioned to be close to the upper energized heating element 11 of the crucibles 20 disposed in the energizing heating-processing section 6. That is, the upper and lower energized heating elements 11 and 12 in this embodiment are configured to allow a plurality of crucibles 20 to be arranged in series therebetween. In addition, each of the upper and lower energized heating elements 11 and 12 is formed of a material whose specific resistance is greater than that of each of the crucibles 20.

As shown in FIG. 2, four crucibles 20 disposed in a lower position (close to the lower energized heating element 12) are provided with no lids, and in the four crucibles 20, a crucible 20 disposed above serves as a lid which covers an opening (an upper opening) of another crucible 20 disposed thereunder. That is, the outer circumferential edge part of the opening-side of the crucible 20 is provided with a first engagement part 21 formed of a depression and a brim, and the outer circumferential edge part of the bottom of the crucible 20 is provided with a second engagement part 22 which is formed of a protrusion and a depression and detachably engages with the first engagement part 21. Thus, the crucibles 20 are configured so that the first engagement part 21 of a crucible 20 disposed in a lower position is engaged with the second engagement part 22 of another crucible 20 disposed in an upper position, and thereby the opening of the crucible 20 disposed in the lower position is covered with the bottom of the crucible 20 disposed in the upper position.

The uppermost crucible 20 of the five crucibles 20 disposed in series is mounted with a lid 23 including the second engagement part 22. The lid 23 is a circular disk-shaped member formed having the same outer diameter as that of the crucible 20. In addition, the lid 23 is an adjunct to the crucible 20, and thus there is a case where the crucible of the present invention includes the lid 23, or there is a case where the crucible of the present invention does not include the lid 23. In this embodiment, the crucible of the present invention corresponds to the crucible 20 and the lid 23. The lid 23 in this embodiment is formed of a material similar to that of the crucible 20.

The outer diameter of each of the crucible 20 and the lid 23 is formed to be equal to or less than that of each of the upper and lower energized heating elements 11 and 12. Therefore, the surface of each of the upper and lower energized heating elements 11 and 12 which contacts the lid 23 or the crucible 20 has a size equal to or greater than that of the outline of each of the lid 23 and the crucible 20. In other words, the surface of the upper energized heating element 11 which contacts the lid 23 (the crucible) has a size greater than or equal to that of the end surface of the lid 23 which contacts the upper energized heating element 11, and the surface of the lower energized heating element 12 which contacts the crucible 20 (the crucible) has a size greater than or equal to that of the end surface of the crucible 20 which contacts the lower energized heating element 12. Accordingly, the lid 23 or the crucible 20 is prevented from protruding outward (outward in a horizontal direction) from the upper or lower energized heating element 11 or 12, and the entire surfaces of the lid 23 and the crucible 20 can contact the upper and lower energized heating elements 11 and 12, respectively.

Materials, whose properties are not limited to electrical conductivity or non-conductivity and which have various properties, are used for the object W1 to be processed which is put into the crucible 20. Specifically, carbon powder, graphite, carbon fiber or the like is used therefor. With respect to the form thereof, a material can be used which has a sheet form, a block form or the like obtained through, for example, pre-baking, other than a powder form and a fibrous form. That is, the object W1 to be processed may have any form as long as the object W1 to be processed is contained in the crucible 20.

The object W1 to be processed is filled in the crucible 20 with an appropriate filling density and is subjected to the processing.

At this time, as described below, in this embodiment, since the object W1 to be processed contained in the crucible 20 is heated by the crucible 20 being energized and heating up, even if there is a variation in the bulk specific gravity (the filling density) of the object W1 to be processed contained in the crucible 20, the object W1 to be processed can be uniformly heated and processed without being substantially affected by the variation in the bulk specific gravity. In addition, since a conventional operation such as pressing of a divided electrode on part of the object W1 to be processed is not performed, it is also possible to prevent a large variation from occurring in the filling density (the bulk specific gravity) of the object W1 to be processed filled in the crucible 20.

In this embodiment, five crucibles 20 are used, and the object W1 to be processed is put into each crucible 20. Therefore, with respect to the objects W1 to be processed which are put into the crucibles 20, all the objects W1 to be processed may be the same, some of the objects W1 to be processed may be different from the other objects W1 to be processed, and all the objects W1 to be processed may be different from each other. Particularly, in a case where the objects W1 to be processed which are put into the crucibles 20 are different from each other, since the amount of one batch of processing by each crucible 20 is small, for example, a process in which small amounts of samples different from each other are produced by the crucibles 20 and tests (experiments) are carried out on the obtained samples can be performed at comparatively low cost in a short period of time.

That is, the level (the mixing ratio) of the additive amount of an additive or the like in the object W1 to be processed can be easily changed among the crucibles 20, for example, the additive amount of an additive in the object W1 to be processed at a first crucible 20 may be set to 2%, the additive amount of the additive at a second crucible 20 may be set to 4%, the additive amount of the additive at a third crucible 20 may be set to 6%, the additive amount of the additive at a fourth crucible 20 may be set to 8%, and the additive amount of the additive at a fifth crucible 20 may be set to 10%. After the objects W1 to be processed are processed at one time, namely under the same condition, characteristic tests are performed on the objects W1 obtained through the process, and thereby an optimum additive amount of the additive can be determined.

As shown in FIG. 1, a part of the upper electrode 8 positioned above the top portion 5 is provided with a circular annular upper energizer 13. On the other hand, a part of the lower electrode 9 positioned below the bottom portion 3 is provided with a circular annular lower energizer 14. The upper and lower energizers 13 and 14 may be water-cooled electrodes. The upper and lower energizers 13 and 14 are connected with a DC power source 15 which energizes therebetween and makes the upper and lower energizers 13 and 14 perform energizing heating. The power source 15 is provided with a controller (not shown), and it is possible to cause an intended magnitude of electric current to flow between the upper and lower energizers 13 and 14 by control of the controller. That is, an intended electric current is caused to flow via the crucibles 20 into the energizing heating-processing section 6 provided between the upper energized heating element 11 of the upper electrode 8 and the lower energized heating element 12 of the lower electrode 9, and the crucibles 20 are energized and themselves generate heat through resistance heating (Joule heat), whereby the objects W1 to be processed contained therein can be heated. That is, the crucible 20 and the lid 23 in this embodiment are configured to generate heat (to generate Joule heat) by being energized, and to directly heat the object W1 to be processed contained therein.

When the object W1 to be processed is graphitized by the graphitization furnace 1A having the above configuration, first, the object W1 to be processed is filled in each crucible 20. At this time, in a case where a level test is particularly performed on the obtained products (graphite), various specimens prepared beforehand serving as the objects W1 to be processed are filled in the crucibles 20. With respect to filling, if the form of the object W1 to be processed is, for example, a powder form or a fibrous form, it is sufficient that the object W1 to be processed be merely poured thereinto without a special filling method such as pressure filling being adopted. Even when the object W1 to be processed is filled in this way, a large variation is prevented from occurring in the filling density of the object W1 to be processed among a plurality of crucibles 20 or inside each crucible 20. In addition, even if a small variation occurs therein, occurrence of non-uniform heating is prevented.

Next, in a state where the lower electrode 9 is lowered, the crucibles 20 are stacked in order between the upper and lower energized heating elements 11 and 12, and the lid 23 is mounted on the uppermost crucible 20. Subsequently, the lower electrode 9 is lifted up by operation of the lifter 10, and the five crucibles 20 are sandwiched in series between the upper and lower energized heating elements 11 and 12. At this time, the upper and lower energized heating elements 11 and 12 do not apply a large pressure to the crucibles 20, and the crucibles 20 are sandwiched between the upper and lower energized heating elements 11 and 12 at a pressure in which the upper and lower energized heating elements 11 and 12 uniformly contact the lid 23 and the bottom surface of the crucible 20. In addition, the crucibles 20 are disposed so that the entire surface of the lid 23 and the entire bottom surface of the crucible 20 contact the upper and lower energized heating elements 11 and 12, and the lid 23 or the bottom surface of the crucible 20 does not protrude from the upper or lower energized heating element 11 or 12.

Subsequently, an intended magnitude of electric current is caused to flow between the upper and lower energizers 13 and 14 by control of the controller of the power source 15. Accordingly, an electric current flows through the five crucibles 20 positioned between the upper energized heating element 11 of the upper electrode 8 and the lower energized heating element 12 of the lower electrode 9, and the crucibles 20 are energized and heat up, whereby the objects W1 to be processed are heated. Since the entire crucible 20 approximately uniformly generates heat through resistance heating, the object W1 to be processed contained therein is uniformly heated. If a correlation between the value of the electric current flowing through the crucible 20 and the heating temperature of the crucible 20 through energizing heating is determined beforehand, the controller of the power source 15 can appropriately control the heating temperature on the object W1 to be processed contained in the crucible 20.

It is to be noted that the component which directly heats the object W1 to be processed is the crucible 20 (the lid 23), and the temperature of the crucible 20 increases to, for example, about 3000°C. Accordingly, if heat escapes from a crucible via an upper electrode or a lower electrode contacting the crucible, the temperature of the crucible decreases, and it may be difficult to efficiently heat an object to be processed contained in the crucible. However, in this embodiment, the upper energized heating element 11 is provided between the upper electrode 8 and the crucible 20, the lower energized heating element 12 is provided between the lower electrode 9 and the crucible 20, and furthermore, for example, the specific resistance of each of the upper and lower energized heating elements 11 and 12 is set to be greater than that of the crucible 20, whereby the amount of generated heat of each of the upper and lower energized heating elements 11 and 12 can become greater than that of the crucible 20. That is, the temperature of each of the upper and lower energized heating elements 11 and 12 can become higher than that of the crucible 20, whereby heat of the crucible 20 can be prevented from escaping via the upper or lower energized heating element 11 or 12, and thus it is possible to maintain the crucible 20 at a temperature suitable for heating (graphitization) for the object W1 to be processed.

Even if the specific resistance of each of the upper and lower energized heating elements 11 and 12 is less than or equal to that of the crucible 20, the upper and lower energized heating elements 11 and 12 generate heat, and thereby heat of the crucible 20 can be limited from escaping via the upper or lower energized heating element 11 or 12.

If the amount of generated heat of each of the upper and lower energized heating elements 11 and 12 is significantly large, the heat may transmit to the crucible 20, and the temperature of the crucible 20 may unnecessarily increase. Accordingly, the specific resistances of the upper and lower energized heating elements 11 and 12 may be set to an extent in which heat generated in the crucible 20 can be limited from escaping to the upper or lower energized heating element 11 or 12 and heat generated in the upper or lower energized heating element 11 or 12 can be prevented from unnecessarily transmitting to the crucible 20.

If each of the upper and lower energizers 13 and 14 is an electrode including a cooling structure such as a water-cooled electrode, the upper and lower electrodes 8 and 9 are cooled by the upper and lower energizers 13 and 14, respectively, and thus heat generated in the upper and lower energized heating elements 11 and 12 may escape via the upper and lower electrodes 8 and 9, respectively. However, the upper and lower electrodes 8 and 9 in this embodiment are formed of graphite, and these electrodes can generate heat. If the specific resistances of the upper and lower electrodes 8 and 9 are appropriately set, heat generated in the upper and lower energized heating elements 11 and 12 can be prevented from escaping via the upper and lower electrodes 8 and 9, and thus the upper and lower energized heating elements 11 and 12 can be maintained at an appropriate high temperature. In addition, since the generation of heat from the upper and lower electrodes 8 and 9 does not function to directly prevent an escape of heat from the crucible 20, the specific resistances of the upper and lower electrodes 8 and 9 may be set to be less than or equal to those of the upper and lower energized heating elements 11 and 12 in order that a large decrease of the value of the electric current flowing through the crucible 20 is prevented.

The object W1 to be processed is heated for a predetermined period of time at an energizing heating temperature set beforehand in the above way, and thereby the object W1 to be processed is graphitized. That is, the graphitization furnace 1A of this embodiment is configured to heat and graphitize the object W1 to be processed disposed between the upper and lower energized heating elements 11 and 12 by energizing between the upper and lower electrodes 8 and 9.

Thereafter, the crucible 20 is unloaded from the energizing heating-processing section 6, the graphitized object W1 is drawn from the crucible 20, and as needed, a comminution process is performed thereon, whereby the object W1 is processed into the form of the end product.

In the graphitization furnace 1A of this embodiment, since the upper and lower energized heating elements 11 and 12 are provided on the surfaces of the upper and lower electrodes 8 and 9 facing each other, respectively, when energizing between the upper and lower energized heating elements 11 and 12 is performed, the crucible 20 in the energizing heating-processing section 6 provided therebetween can be uniformly energized and heated. In addition, since the electrical conductive crucible 20 containing the object W1 to be processed is disposed in the energizing heating-processing section 6, when the crucible 20 is energized and heats up, the object W1 to be processed contained in the crucible 20 can be uniformly heated. Thus, it is possible to simplify the energizing control during heating, and to prevent occurrence of variation in the quality of the products (graphite) obtained thereby and to stabilize the quality.

Since the five (a plurality of) crucibles 20 are arranged in series between the upper and lower energized heating elements 11 and 12, if specimens (the objects W1 to be processed) different from each other are put into the five (a plurality of) crucibles 20 and are subjected to a heating process, it is possible to appropriately perform a level test or the like for determining, for example, the optimum amount of an additive in the obtained object W1. That is, it is possible to perform at comparatively low cost in a short period of time the production of specimens which are used for such a level test or the like.

Since the specific resistance of each of the upper and lower energized heating elements 11 and 12 is set to be greater than that of the crucible 20, electricity relatively easily flows through the crucibles 20 between the upper and lower energized heating elements 11 and 12, and thus an electric current can be caused to further uniformly flow in the connection direction (the axial direction) of the five (a plurality of) crucibles 20 disposed in series. Thus, it is possible to uniformly heat the objects W1 to be processed contained in the crucibles 20. In addition, it is possible to improve the heat-generating efficiency of the object W1 to be processed.

Since the surfaces of the upper and lower energized heating elements 11 and 12 which contact the crucible 20 (including the lid 23) are set to have sizes equal to or greater than those of the lid 23 and of the bottom surface of the crucible 20, it is possible to cause an electric current to uniformly flow through the entire crucibles 20. Thus, the five (a plurality of) crucibles 20 disposed in series can uniformly heat up, and the objects W1 to be processed contained therein can be uniformly heated.

The opening-side of the crucible 20 is provided with the first engagement part 21, and the bottom thereof is provided with the second engagement part 22. Therefore, the first and second engagement parts 21 and 22 are engaged with each other, and thereby the plurality of crucibles 20 disposed in the up-and-down direction can be reliably brought into close contact with each other. Thus, it is possible to cause an electric current to uniformly flow through the plurality of crucibles 20 disposed in the up-and-down direction.

### (Second Embodiment)

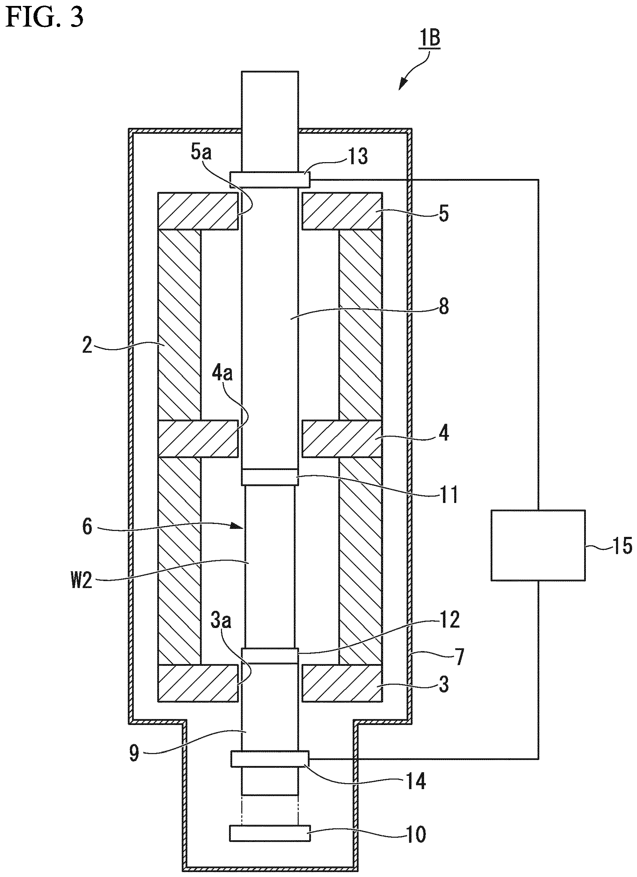

FIG. 3 is a cross-sectional side view showing a second embodiment of the graphitization furnace of the present invention, in which the reference sign 1B represents a graphitization furnace. In the second embodiment, a component having approximately the same function and structure as those of a component in the first embodiment is attached with the same reference sign as that of the component in the first embodiment, and duplicate descriptions may be omitted.

In an energizing heating-processing section 6 of this embodiment, a molded object W2 to be processed (an object to be processed) described below is disposed. The specific resistance of each of upper and lower energized heating elements 11 and 12 of this embodiment is set to be greater than that of the molded object W2 to be processed. The surface of the upper energized heating element 11 which contacts the molded object W2 to be processed has a size greater than or equal to that of the end surface of the molded object W2 to be processed which contacts the upper energized heating element 11, and the surface of the lower energized heating element 12 which contacts the molded object W2 to be processed has a size greater than or equal to that of the end surface of the molded object W2 to be processed which contacts the lower energized heating element 12.

The upper and lower energized heating elements 11 and 12 are disposed facing each other with an appropriate distance therebetween. That is, the central axes thereof extending in the vertical direction are disposed coaxially with each other. The energizing heating-processing section 6, in which the molded object W2 to be processed is subjected to an energizing heating process, is provided between the upper and lower energized heating elements 11 and 12.

The molded object W2 to be processed which is disposed in the energizing heating-processing section 6 is an electrically conductive member molded beforehand, specifically a member molded of carbon powder into a circular columnar shape or the like. It is to be noted that in the present invention, various electrically conductive heat-generating materials which generate heat due to internal resistance by being energized, such as graphite or carbon fiber other than carbon powder, can be used for the material of the molded object W2 to be processed as long as the materials are electrically conductive and are capable of being molded. That is, the molded object W2 to be processed in this embodiment is configured to generate heat (to generate Joule heat) by being energized.

As the molding method for such an electrically conductive heat-generating material, for example, a method is adopted in which the material is added with and mixed (kneaded) with a binder, subsequently the material is formed into an intended shape through extrusion molding or the like, and thereafter as needed, the material is pre-baked at, for example, a temperature greater than or equal to several hundred degrees Celsius. The temperature of pre-baking is not particularly limited if the material can have electrical conductivity through, for example, graphitization. It is preferable that the shape of the molded object be formed in a circular columnar shape because an electric current is easily made to uniformly flow into the circular end surface of the columnar shape in the surface direction thereof. In addition, it is preferable that the end surface of the circular columnar shape have a diameter equal to or less than that of each of the upper and lower energized heating elements 11 and 12.

Each process of mixing, molding and pre-baking is performed in the above way, and thereby it is possible to eliminate variation in the bulk specific gravity (the filling density) of the electrically conductive heat-generating material forming a molded object obtained after pre-baking, namely the molded object W2 to be processed. In addition, pre-baking is performed after extrusion molding in the above way, and thereby it is possible to improve the strength of an obtained molded object (the molded object W2 to be processed) and ease of handling thereof. Furthermore, pre-baking is performed, whereby it is possible to vaporize and remove an added binder from the molded object W2 to be processed, and thus to prevent pollution of the inside of the graphitization furnace 1B due to the binder.

A part of an upper electrode 8 positioned above a top portion 5 is provided with a circular annular upper energizer 13. On the other hand, a part of a lower electrode 9 positioned below a bottom portion 3 is provided with a circular annular lower energizer 14. The upper and lower energizers 13 and 14 may be water-cooled electrodes. A DC power source 15 is connected to the upper and lower energizers 13 and 14 in order to energize therebetween and to make them perform energizing heating. The power source 15 is provided with a controller (not shown), and it is possible to cause an intended magnitude of electric current to flow between the upper and lower energizers 13 and 14 by control of the controller. That is, the power source 15 is configured to cause an intended electric current to flow via the molded object W2 to be processed into the energizing heating-processing section 6 provided between the upper energized heating element 11 of the upper electrode 8 and the lower energized heating element 12 of the lower electrode 9, and to energize and heat the molded object W2 to be processed.

When the molded object W2 to be processed is graphitized by the graphitization furnace 1B having the above configuration, first, the object W2 molded beforehand to be processed is disposed in the energizing heating-processing section 6. At this time, the lower electrode 9 is lowered by a lifter 10. In a state where the lower electrode 9 is lowered in this way, the graphitization furnace 1B is configured so that the height of the energizing heating-processing section 6, namely the distance between the upper and lower energized heating elements 11 and 12, becomes greater than the height of the molded object W2 to be processed. In other words, in molding of the molded object W2 to be processed, the molded object W2 to be processed is molded so that the height thereof accords with the height of the energizing heating-processing section 6.

Next, the lower electrode 9 is lifted up by the lifter 10 being operated, and the molded object W2 to be processed is sandwiched between the upper and lower energized heating elements 11 and 12. That is, the upper and lower energized heating elements 11 and 12 are configured to allow to be sandwiched (disposed) therebetween, the electrically conductive molded object W2 to be processed. At this time, the upper and lower energized heating elements 11 and 12 do not apply a large pressure to the molded object W2 to be processed, and the molded object W2 to be processed is sandwiched between the upper and lower energized heating elements 11 and 12 at a pressure such that the upper and lower energized heating elements 11 and 12 uniformly contact the end surfaces of the molded object W2 to be processed. In addition, the molded object W2 to be processed is disposed so that the entire upper and lower end surfaces of the molded object W2 to be processed contact the upper and lower energized heating elements 11 and 12, respectively, and the end surfaces of the molded object W2 to be processed do not protrude from the upper or lower energized heating element 11 or 12.

Subsequently, an intended magnitude of electric current is made to flow between the upper and lower energizers 13 and 14 by control of the controller of the power source 15. Accordingly, an electric current flows through the molded object W2 to be processed positioned between the upper energized heating element 11 of the upper electrode 8 and the lower energized heating element 12 of the lower electrode 9, and the molded object W2 to be processed is energized and heats up. That is, the molded object W2 to be processed itself generates heat by being energized. A correlation between the value of the electric current flowing through the molded object W2 to be processed and the heating temperature of the molded object W2 to be processed through energizing heating is determined beforehand, and thereby the controller of the power source 15 can appropriately control the energizing heating temperature of the molded object W2 to be processed.

It is to be noted that the molded object W2 to be processed itself generates heat by being energized, and the temperature of the molded object W2 to be processed increases to about 3000°C. Accordingly, heat may escape from a molded object to be processed via an upper electrode or a lower electrode contacting the object, and it may be difficult to maintain the molded object to be processed at an appropriate temperature suitable for graphitization. However, in this embodiment, the upper energized heating element 11 is provided between the upper electrode 8 and the molded object W2 to be processed, and the lower energized heating element 12 is provided between the lower electrode 9 and the molded object W2 to be processed, and furthermore, for example, the specific resistance of each of the upper and lower energized heating elements 11 and 12 is set to be greater than that of the molded object W2 to be processed, whereby the amount of generated heat of each of the upper and lower energized heating elements 11 and 12 can become greater than that of the molded object W2 to be processed. That is, the temperature of each of the upper and lower energized heating elements 11 and 12 can become higher than that of the molded object W2 to be processed, whereby it is possible to prevent escape of heat from the molded object W2 to be processed via the upper or lower energized heating element 11 or 12, and thus to maintain the molded object W2 to be processed at a temperature suitable for graphitization.

Even if the specific resistance of each of the upper and lower energized heating elements 11 and 12 is set to be less than or equal to that of the molded object W2 to be processed, since the upper and lower energized heating elements 11 and 12 generate heat, it is possible to limit escape of heat from the molded object W2 to be processed via the upper or lower energized heating element 11 or 12.

If the amount of generated heat of the upper and lower energized heating elements 11 and 12 is too large, the heat may transmit to the molded object W2 to be processed, and the temperature of the molded object W2 to be processed may unnecessarily increase. Accordingly, the specific resistances of the upper and lower energized heating elements 11 and 12 may be set to an extent in which heat generated in the molded object W2 to be processed can be limited from escaping to the upper or lower energized heating element 11 or 12 and heat generated in the upper and lower energized heating elements 11 and 12 can be prevented from unnecessarily transmitting to the molded object W2 to be processed.

Even if each of the upper and lower energizers 13 and 14 is an electrode including a cooling structure such as a water-cooled electrode, the upper and lower electrodes 8 and 9 in this embodiment are formed of graphite similarly to the above first embodiment, and these electrodes themselves can generate heat. If the specific resistances of the upper and lower electrodes 8 and 9 are appropriately set, heat generated in the upper and lower energized heating elements 11 and 12 can be prevented from escaping via the upper and lower electrodes 8 and 9, and thus the upper and lower energized heating elements 11 and 12 can be maintained at an appropriate high temperature. In addition, since the generation of heat from the upper and lower electrodes 8 and 9 does not function in directly preventing escape of heat from the molded object W2 to be processed, the specific resistances of the upper and lower electrodes 8 and 9 may be set to be less than or equal to those of the upper and lower energized heating elements 11 and 12 in order to prevent a large decrease of the value of the electric current flowing through the molded object W2 to be processed.

The molded object W2 to be processed is heated for a predetermined period of time at an energizing heating temperature set beforehand in the above way, and thereby the molded object W2 to be processed is graphitized. That is, the graphitization furnace 1B of this embodiment is configured to heat and graphitize the molded object W2 to be processed (an object to be processed) disposed between the upper and lower energized heating elements 11 and 12 by energizing between the upper and lower electrodes 8 and 9.

Thereafter, the graphitized molded object W2 is unloaded from the energizing heating-processing section 6, for example, a comminution process is performed thereon, and thereby the object is processed into the form of an end product.

In the graphitization furnace 1B of this embodiment, the upper and lower energized heating elements 11 and 12 are provided on the surfaces of the upper and lower electrodes 8 and 9 facing each other, respectively. Therefore, it is possible to uniformly heat the molded object W2 to be processed in the energizing heating-processing section 6 provided between the upper and lower energized heating elements 11 and 12 by energizing therebetween. In addition, since the molded object W2 to be processed, in which variation in the bulk specific gravity (the filling density) thereof is eliminated through molding, is disposed in the energizing heating-processing section 6 and is energized and heated, it is possible to uniformly energize and heat the molded object W2 to be processed. Thus, it is possible to simplify the energizing control during heating, and to prevent occurrence of variation in the quality of the products (graphite) obtained thereby and to stabilize the quality. In addition, since conventional dust work accompanying handling of powder is eliminated, the workability is improved.

Since the specific resistance of each of the upper and lower energized heating elements 11 and 12 is set to be greater than that of the molded object W2 to be processed, electricity relatively easily flows through the molded object W2 to be processed positioned between the upper and lower energized heating elements 11 and 12, and thus an electric current can be made to further uniformly flow in the axial direction of the molded object W2 to be processed, and the molded object W2 to be processed can be uniformly heated. In addition, it is possible to improve the heating efficiency of the molded object W2 to be processed.

Since the surface of each of the upper and lower energized heating elements 11 and 12 which contacts the molded object W2 to be processed is set to have a size equal to or greater than the end surface of the molded object W2 to be processed, it is possible to cause an electric current to uniformly flow through the entire end surface of the molded object W2 to be processed. Thus, it is also possible to uniformly heat the molded object W2 to be processed in a surface direction parallel to the end surface thereof.

Since a pre-baked molded object is used as the molded object W2 to be processed, it is possible to improve the strength of the molded object W2 to be processed and the ease of handling thereof Furthermore, even if a binder is used during molding, it is possible to vaporize and remove the added binder from the molded object W2 to be processed through pre-baking, and thus to prevent pollution of the inside of the graphitization furnace 1B due to the binder.

Hereinbefore, although embodiments of the present invention have been described with reference to the attached drawings, the present invention is not limited to the above embodiments. The shape, the combination or the like of each component shown in the above embodiments is an example, and addition, omission, replacement, and other modifications of a configuration based on a design request or the like can be adopted within the scope of the present invention.

For example, although five crucibles 20 are arranged in series in the energizing heating-processing section 6 in the above first embodiment, the present invention is not limited thereto. Only one crucible 20 may be arranged, or two to four, six or more crucibles 20 may be arranged. In a case where one crucible 20 is arranged in the energizing heating-processing section 6, the crucible 20 may be made to have a large capacity, and the diameter of the crucible 20 may be set to be greater than that of, for example, the upper or lower energized heating element 11 or 12.

A plurality of crucibles 20 may be arranged in parallel in the energizing heating-processing section 6. That is, the plurality of crucibles 20 may be arranged in a horizontal direction.

Although the lid 23 is mounted only on the uppermost crucible 20 of the five crucibles 20 arranged in series in the first embodiment, the lid 23 may be mounted on each of all the crucibles 20. In this case, the upper surface of the lid 23 may be provided with the first engagement part 21 which engages with the second engagement part 22 of the bottom of the crucible 20.

Although the upper and lower energized heating elements 11 and 12 are formed having the same diameters as those of the upper and lower electrodes 8 and 9 respectively in the first embodiment, the upper and lower energized heating elements 11 and 12 may be formed having greater diameters than those of the upper and lower electrodes 8 and 9 respectively. In a case where the elements are formed in this way, even if a crucible 20 is used which has a greater diameter than that of each of the upper and lower electrodes 8 and 9, when the lid of and the bottom surface of the crucible 20 are formed having sizes equal to or less than those of the surfaces of the upper and lower energized heating elements 11 and 12, an electric current can be made to uniformly flow through the entire crucible 20, and the object W1 to be processed contained therein can also be uniformly heated.

Although the upper and lower energized heating elements 11 and 12 are formed having the same diameters as those of the upper and lower electrodes 8 and 9 respectively in the second embodiment, the upper and lower energized heating elements 11 and 12 may be formed having greater diameters than those of the upper and lower electrodes 8 and 9 respectively. In this case, the molded object W2 to be processed can be formed having a greater diameter than that of each of the upper and lower electrodes 8 and 9 as long as the end surfaces of the molded object W2 to be processed are formed having sizes equal to or less than those of the surfaces of the upper and lower energized heating elements 11 and 12.

Thus, it is possible to increase the amount of one batch of the graphitization process, and to improve the production efficiency.

Although the first and second embodiments describe a case where a graphitization furnace of the present invention is applied to a batch processing-type apparatus, the present invention is not limited thereto and can be applied to a continuous processing-type graphitization furnace. For example, conveyance paths are provided in the front and rear of the graphitization furnace 1A shown in FIG. 1, and the crucible 20 containing the object W1 to be processed is supplied through a conveyance path to the energizing heating-processing section 6 of the graphitization furnace 1A. Subsequently, an energizing heating process is performed in the graphitization furnace 1A similarly to the first embodiment, the object W1 to be processed contained in the crucible 20 is graphitized, and thereafter the processed object W1 (the crucible 20) is unload therefrom through another conveyance path, and a new unprocessed crucible 20 is supplied to the energizing heating-processing section 6. Thereafter, such a process is repeated, and thus the graphitization process for the object W1 to be processed can be continuously performed. Such conveyance paths may be provided in the graphitization furnace 1B of the second embodiment, and the molded object W2 to be processed may be loaded into and unloaded from the energizing heating-processing section 6 through the conveyance paths.

### Description of Reference Signs

- 1A, 1B: graphitization furnace
- 6: energizing heating-processing section
- 8: upper electrode (first electrode)
- 9: lower electrode (second electrode)
- 11: upper energized heating element (first energized heating element)
- 12: lower energized heating element (second energized heating element)
- 20: crucible
- 23: lid
- W1: object to be processed
- W2: molded object to be processed (object to be processed)

## Claims

1. A graphitization furnace which heats and graphitizes an object to be processed, the graphitization furnace comprising:
a first electrode;
a second electrode disposed so as to face the first electrode;
a first energized heating element provided on a surface of the first electrode facing the second electrode; and
a second energized heating element provided on a surface of the second electrode facing the first electrode;
wherein the first and second energized heating elements are configured to allow to be disposed therebetween, an object to be processed, and
wherein the graphitization furnace is configured to heat and graphitize the object to be processed disposed between the first and second energized heating elements by energizing between the first and second electrodes.

2. The graphitization furnace according to Claim 1,
wherein the first and second energized heating elements are configured to allow to be sandwiched therebetween, an electrically conductive crucible containing the object to be processed.

3. The graphitization furnace according to Claim 2,
wherein the first and second energized heating elements are configured to allow a plurality of crucibles to be arranged in series therebetween.

4. The graphitization furnace according to Claim 2,
wherein the specific resistance of each of the first and second energized heating elements is greater than that of the crucible.

5. The graphitization furnace according to Claim 3,
wherein the specific resistance of each of the first and second energized heating elements is greater than that of each of the crucibles.

6. The graphitization furnace according to any one of Claims 2 to 5,
wherein a surface of the first energized heating element which contacts the crucible has a size greater than or equal to that of an end surface of the crucible which contacts the first energized heating element, and a surface of the second energized heating element which contacts the crucible has a size greater than or equal to that of an end surface of the crucible which contacts the second energized heating element.

7. The graphitization furnace according to Claim 1,
wherein the first and second energized heating elements are configured to allow to be sandwiched therebetween, an electrically conductive molded object to be processed.

8. The graphitization furnace according to Claim 7,
wherein the specific resistance of each of the first and second energized heating elements is greater than that of the molded object to be processed.

9. The graphitization furnace according to Claim 7 or 8,
wherein a surface of the first energized heating element which contacts the molded object to be processed has a size greater than or equal to that of an end surface of the molded object to be processed which contacts the first energized heating element, and a surface of the second energized heating element which contacts the molded object to be processed has a size greater than or equal to that of an end surface of the molded object to be processed which contacts the second energized heating element.
